# EUROPEAN PATENT APPLICATION

(11) **EP 4 723 764 A1**
(43) Date of publication of application: **08.04.2026**
(21) Application number: 24939538.5
(22) Date of filing: 25.12.2024
(51) Int. Cl.: H04W 64/00

(54) **UWB COMMUNICATION METHOD, DEVICE AND SYSTEM**

(30) Priority: 22.05.2024 CN 202410644273
(71) Applicant: Calterah Semiconductor Technology (Shanghai) Co., Ltd., Shanghai 201210 (CN)
(72) Inventor: MA, Zhepeng, Shanghai 201210 (CN); ZHANG, Daiqin, Shanghai 201210 (CN); SHAO, Hongxu, Shanghai 201210 (CN)
(74) Representative: Balder IP Law, S.L.
(86) International application number: PCT/CN2024/142418
(87) International publication number: WO 2025/241526

(57) **Abstract**

The embodiments of the present disclosure disclose a method, a device, and a system for UWB communication. The UWB communication method includes: sending a ranging start frame to a plurality of second devices; receiving response frames from the plurality of second devices in a plurality of response time slots; sending a ranging end frame to the plurality of second devices; where each of the second devices maintains at least two sessions with the first device. The embodiments of the present disclosure optimize UWB ranging interactions under a plurality of sessions.

## Description

### CROSS-REFERENCE TO RELATED APPLICATION

This application claims priority to Chinese Patent Application No. CN202410644273.3, entitled "METHOD, DEVICE, AND SYSTEM FOR UWB COMMUNICATION," filed on May 22, 2024, which is incorporated by reference herein in its entirety.

### TECHNICAL FIELD

The embodiments of this application relate to wireless communication technology, particularly to a method, a device, and a system for UWB communication.

### BACKGROUND

With the continuous research on wireless technology, wireless devices not only possess communication capabilities but also can provide measurement functions. By leveraging the communication characteristics of wireless devices across different frequency bands, the wireless devices can be configured with various measurement technologies such as ranging, angle measurement, and positioning. Among these, measurement technology based on UWB (Ultra-Wide Band) communication has many advantages, such as higher accuracy and lower cost, over other RF (Radio Frequency) communication measurement solutions. Utilizing this technology, the application of devices in fields like the Internet of Things, industry, and automotive is gradually becoming widespread.

As this technology is practiced in different application areas, it has also revealed areas for improvement in at least one aspect of measurement accuracy, measurement resolution, channel capacity, and communication capability to varying degrees.

### SUMMARY

The embodiments of the present disclosure provide a method, a device, and a system for UWB communication to address at least issues involved in UWB communication.

In a first aspect, the embodiments of the present disclosure provide a UWB communication method for a first device, the method including: sending a ranging start frame to a plurality of second devices, receiving response frames from the plurality of second devices in a plurality of response time slots, respectively, and sending a ranging end frame to the plurality of second devices. The first device maintains at least two sessions with different second devices respectively.

In some embodiments of the first aspect, the method further includes: performing measurement calculations using the transmission and reception timestamps of the ranging start frame and each of the response frames.

In some embodiments of the first aspect, the ranging end frame contains measurement values configured based on each session.

In some embodiments of the first aspect, the first device sends UWB signal frames to a plurality of second devices in a same transmission time slot, where the UWB signal frames include the ranging start frame, and/or the UWB end frame.

In some embodiments of the first aspect, at least one of the plurality of second devices includes a plurality of UWB anchors participating in ranging interactions, and the plurality of response time slots include a respective response time slot for each UWB anchor to transmit a response frame.

In some embodiments of the first aspect, continuous response time slots in the plurality of response time slots are used for respective UWB anchor of at least one of the second devices to transmit each of the response frames.

In some embodiments of the first aspect, the ranging start frame contains measurement parameters configured based on each session.

In some embodiments of the first aspect, the data carried by the UWB signal frames that the first device interacts with each of the plurality of second devices is obtained from various information security processes configured based on each session.

In some embodiments of the first aspect, the data carried by the UWB signal frames that the first device interacts with each of the plurality of second devices includes data shared among different sessions.

In some embodiments of the first aspect, during a multi-round ranging interactions, the number of the plurality of response time slots for different rounds is adjusted according to updated sessions.

In a second aspect, the embodiments of the present disclosure provide a UWB communication method for a respective second device of the plurality of second devices, the method including: extracting the index of at least one response time slot corresponding to the respective second device from a ranging start frame received, transmitting a response frame in a corresponding response time slot according to the index of the at least one response time slot, and receiving a ranging end frame. The ranging start frame includes measurement parameters configured based on at least two sessions, and the index of the at least one response time slot is configured in the measurement parameters to support the ranging response executed in one of the sessions.

In some embodiments of the second aspect, the respective second device includes a plurality of UWB anchors participating in the ranging interactions, and the index of the plurality of response time slots indicates the respective response time slots for each UWB anchor to transmit the response frame.

In some embodiments of the second aspect, the method further includes: performing measurement calculations using the timestamps of the ranging start frame and each of the response frames.

In a third aspect, the embodiments of the present disclosure provide a UWB communication system, including: a first device and a plurality of second devices. The first device establishes at least two sessions with different second devices respectively, the first device performs operations as provided in any one of the first aspects to interact with each second device for ranging.

In a fourth aspect, the embodiments of the present disclosure provide a UWB device, including: a UWB transceiver circuit, a signal processing circuit, and a controller. The controller is coupled to the signal processing circuit and the UWB transceiver circuit, and coordinates the signal processing circuit and the UWB transceiver circuit to implement the UWB communication method as described in any of the above.

### BRIEF DESCRIPTION OF THE DRAWINGS

FIG. 1a is a timing diagram of a ranging interaction involved in some embodiments of the present disclosure;
FIG. 1b is another timing diagram of a ranging interaction involved in some embodiments of the present disclosure;
FIG. 2 is a schematic diagram of an architecture of a UWB communication system of some embodiments of the present disclosure;
FIG. 3 is a flowchart of a UWB communication method of some embodiments of the present disclosure;
FIG. 4a is a timing diagram of a UWB ranging interaction;
FIG. 4b is another timing diagram of a UWB ranging interaction; and
FIG. 4c is yet another timing diagram of a UWB ranging interaction.**DETAILED**

### DESCRIPTION OF THE EMBODIMENTS

The following provides a further detailed explanation of the present disclosure in conjunction with the accompanying drawings and embodiments. It should be understood that the specific embodiments described here are merely for the purpose of explaining the present disclosure and do not limit it. Additionally, it should be noted that for the sake of description, the drawings only show parts relevant to the present disclosure rather than the entire structure.

Certain implementations of the technology involved here would be implemented in any device, system, or network that complies with any communication standard in, for example, the IEEE (Institute of Electrical and Electronics Engineers) 802.15.4. For instance, ultra-wideband standards, IEEE 802.11 standards (such as Wi-Fi 5), Bluetooth standards, CDMA (Code Division A plurality of Access), FDMA (Frequency Division A plurality of Access), TDMA (Time Division A plurality of Access), GSM (Global System for Mobile Communications), GSM/ GPRS (General Packet Radio Service), EDGE (Enhanced Data Rate for GSM Evolution), TETRA (Terrestrial Trunked Radio), W-CDMA s (Wideband Code Division A plurality of Access), EV-DO (Evolution-Data Optimized), 1xEV-DO, EV-DO Rev A, EV-DO Rev B, HRPD (High Rate Packet Data), HSPA (High Speed Packet Access), HSDPA (High Speed Downlink Packet Access), HSUPA (High Speed Uplink Packet Access), HSPA+ (High-Speed Packet Access+), LTE (Long Term Evolution), AMPS (Advanced Mobile Phone System), or other known signal networks for communication within wireless, cellular, or Internet of Things (IoT) environments, such as systems utilizing 3G, 4G, 5G, 6G, or further implementations of these technologies.

Unless otherwise specified here, a same signal (such as RF signal), data (or information) referred to herein is categorized based on the processing stages of the wireless device concerning the signal (or data). Signals (or data) that are at the same processing stage do not convey different meanings due to any differences described below: signal (or data) forms, such as electromagnetic waves or radio waves; signal (or data) transmission methods, such as single-ended transmission or differential transmission; signal characteristics, such as signal gain, frequency, phase; or the form of data structures, etc. The processing stages may be divided based on the functional framework of hardware and software or based on the architecture of communication protocols. For example, the processing stages include transmitting and receiving signals, digital signal processing, measurement calculations, calibration, information security, etc. Additionally, the processing stages can be divided into different phases based on the Open System Interconnect (OSI) model.

The measurement technology based on UWB communication is a technique where devices calculate distance and/or angle by measuring the duration and phase of electromagnetic waves sent through air. This technology can be executed by one or more devices, enabling the devices to provide functionalities related to ranging/angle measurement, positioning, and perception.

In an example where a first device has established the same session with at least one second device in advance and uses ranging interaction to calculate measurement values, the first device and each second device learn the initial parameters required for UWB ranging configuration through session establishment, such as the session and device information (e.g., UWB MAC address) necessary for UWB ranging interaction. When the number of second devices is a plurality of, each second device shares a session to allow all second devices to perform measurements with the first device under the scheduling of the same upper-layer application.

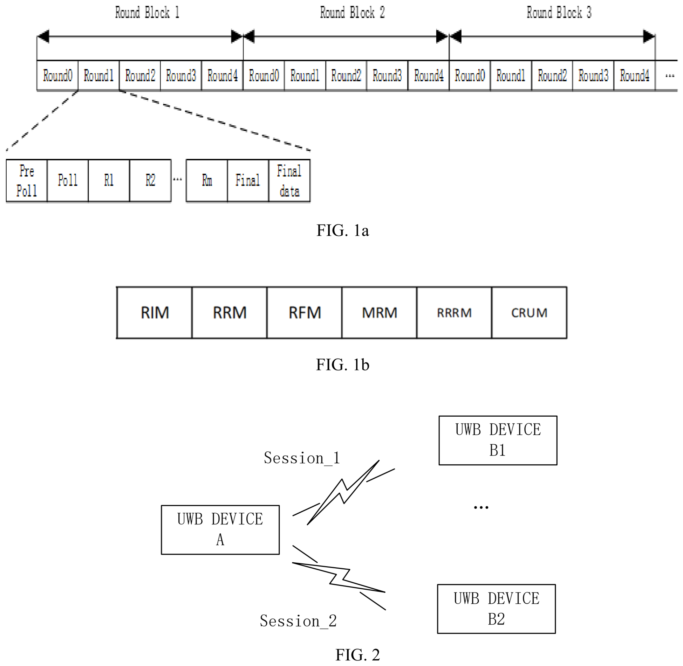

To ensure that the use of measurement technology based on UWB communication is not limited by the protocols set between devices, the first device and each second device perform ranging interaction through the data packets shown in interaction FIG.1a. The first device sends a Pre Poll packet to inform each second device of the transmission and reception order for performing ranging interaction with the first UWB device. Following the transmission and reception order indicated by the Pre Poll packet, the first device sends a Poll packet to inform each second device to start ranging and sequentially receives response frames according to the transmission and reception order. Upon completing the transmission and reception of signal frames according to the order, the first device sends a Final packet to inform each second device that the ranging has ended. And the first device sends a final data packet to carry the measurement values obtained from ranging with each second device. In some embodiments, the Final data packet may also include various configuration parameters required for the next ranging. The transmission and reception order is represented by the time slots shown in Pre Poll, Poll, R1, R2, ..., Rm in FIG. 1a. R1, R2, ..., Rm are the time slots for the response frames sent by different second devices under the same session. The measurement values include, but are not limited to, therelative distance/angle calculated by the first device with respect to each second device, and/or the transmission timestamps, reception timestamps, etc.,of each UWB signal frame collected during the ranging interaction. The UWB signal frames refer to various data frames sent during the ranging interaction, such as any one or more of the Pre Poll packet, Poll packet, response frames, Final packet, and Final data packet.

It should be noted that the above signal frames vary according to different UWB communication protocols. As shown in FIG. 1b, within a ranging round, the UWB ranging interaction includes UWB signal frames such as: Ranging Initiation Message (RIM), Ranging Response Message (RRM), Ranging Final Message (RFM), Measurement Report Message (MRM), Ranging Result Report Message (RRRM), Ranging Control Update Message (CRUM), etc. For example, during the ranging interaction between the first device and each second device, the first device sends an RIM packet to inform each second device to send back an RRM packet in their respective response time slots; each second device then responds with the RRM packet during the response time slot. The first device and each second device exchange various detection values used for measurement calculations through MRM, RRRM, or CRUM packets to complete the measurement calculations. Examples of these detection values include timestamps for transmitting and receiving UWB signal frames, values related to the phase of the UWB signal frames, and so on.

To improve measurement accuracy and reduce the chances of collisions during ranging interactions among devices in a multi-session environment, the first device (e.g., Initiator) and each second device (e.g., Responder) perform the ranging interaction intermittently to complete a measurement. Still referring to FIG. 1a, a ranging block's cycle is divided into 5 ranging rounds (i.e., a ranging block further contains N ranging rounds, where N is greater than or equal to 1), namely Round 0, Round 1, Round 2, Round 3, and Round 4. The first device and m second devices perform ranging interactions within the agreed-upon ranging rounds in the ranging block. In a single measurement, the Initiator and each Responder can perform ranging interactions within the agreed-upon ranging rounds across a plurality of ranging blocks to determine the measured results. In the illustration, m is greater than or equal to 1.

However, in some application scenarios, the first device establishes different sessions with different second devices to improve measurement efficiency. For example, ranging interactions may be conducted among a plurality of vehicles, between vehicles and a plurality of digital keys, or between terminals and a plurality of UWB anchors in IoT scenarios, using different ranging rounds divided within the same duration of the ranging block. However, this approach may lead to various issues such as time slot conflicts and channel occupancy between a plurality of sessions due to ineffective scheduling.

For example, as shown in FIG. 2, UWB device A establishes Session_1 with UWB device B1 and Session_2 with UWB device B2. Under the random scheduling strategy adopted by UWB device A, within the same ranging block duration, Session_1 occupies ranging round index 2, while Session_2 occupies ranging round index 1. Due to the clock deviation of the synchronized clock systems of different sessions, when there are some temporal conflicts between ranging round index 1 and ranging round index 2, the ranging interaction of Session _1 may fail due to the conflict. As the number of sessions maintained by UWB device A increases, the likelihood of ranging failures due to conflicts also increases.

For UWB device A, during the coexistence of Session_1 and Session_2, ranging interactions are conducted using the ranging interaction method shown in FIG. 1a. The UWB device A needs send similar structural ranging start frames, such as Pre Poll and Poll packets, to UWB devices B1 and B2 respectively. This results in significant power consumption for UWB device A.

The embodiments of the present disclosure provide a UWB communication method, which are intended to addressing some potential issues in multi-session ranging interactions. Still referring to FIG. 2, during the coexistence of Session_1 and Session_2, UWB device A acts as the initiator (such as Controller or initiator), while UWB devices B1 and B2 act as responders (such as Controlee or responder).

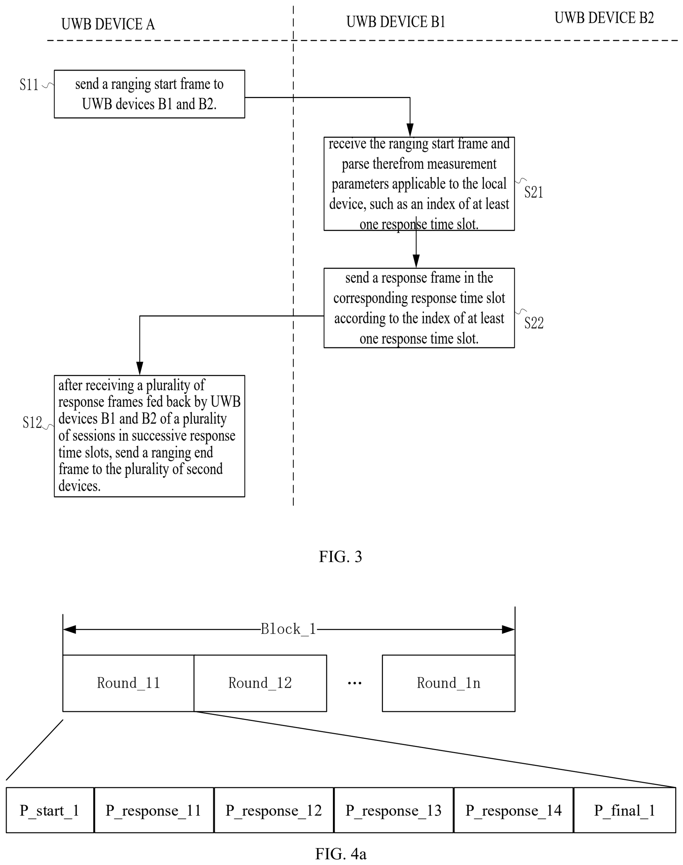

For ease of description, as shown in FIG. 3, the ranging interaction process between UWB device A and UWB devices B1 and B2 is used to illustrate the UWB communication method of this example, in order to address some of the aforementioned issues. Among them, FIG. 3 only shows the interaction operations of UWB device B1, while the interaction operations of UWB device B2 are similar to those of UWB device B1.

At S11, UWB device A sends a ranging start frame to UWB devices B1 and B2. The ranging start frame sent may be exemplified by Pre Poll packets, Poll packets, or RIM packets, etc. This ranging start frame is available for UWB devices B1 and B2 of different sessions to identify. For instance, the Pre Poll packets include device information for UWB devices B1 and B2 to ensure that UWB devices B1 and B2 initiate the ranging interaction.

To allow UWB devices of different sessions to extract the information needed for their respective ranging interactions from the ranging start frame, the ranging start frame includes measurement parameters configured based on each session. Among them, the measurement parameters configured based on each session are included based on the frame structure of the ranging start frame. The measurement parameters configured for each session include, but are not limited to: device information of both parties in the ranging interaction (such as MAC addresses, etc.), ranging block index, ranging round index, response time slot index, time synchronization sequence, session information, and so on.

To shorten the frame length of the ranging start frame, in some embodiments, shared ranging parameters across sessions, such as the ranging block index and ranging round index, may be set in plaintext to reduce redundancy. To prevent relay attacks, in some embodiments, some of the measurement parameters may be sent after undergoing at least one type of information security processing. This information security processing includes: information security processing methods shared by a plurality of sessions, and/or separate information security processing methods established based on each session. Examples of shared information security processing methods include: transmitting the ranging start frame using encryption based on Security Token Service (STS). An example of a separate information security processing method is: using independent key pairs for encryption and decryption. Measurement parameters that require information security processing include, for example: measurement parameters related to device identity; measurement parameters related to the encoding form of UWB signals; measurement parameters related to transmission timing, and so on. The ranging parameters that may be sent using information security mechanisms include, for example, device information of both parties in the ranging interaction (such as MAC addresses, etc.), session information, time synchronization sequences, response time slot indices, and so forth.

It should be noted that the aforementioned embodiments of information security and data sharing, although derived from the measurement parameters in the ranging start frame, may adapt the aforementioned data transmission methods to other data transmission required for the ranging interaction during the multi-session ranging process. For example, any data carried by the UWB signal frames mentioned later. In other words, the data carried by the UWB signal frames includes information security processing configured based on each session, and/or data that may be shared across different sessions. The UWB signal frames include data sent between UWB devices during the effective period of a plurality of sessions, such as response frames, ranging end frames, and so on. This is also explained here. Further details will not be repeated.

At S21, both UWB devices B1 and B2 receive the ranging start frame and parse applicable measurement parameters for their own device, such as an index of at least one response time slot. In some embodiments, the measurement parameters may also include: ranging block index, ranging round index, time synchronization sequence, device information of UWB device A, etc., for performing S22 in the response time slot indicated by the response time slot index. Among them, one UWB anchor is configured in UWB device B1, correspondingly, the index of the response time slot allocated to UWB device B1 in the UWB start frame is one. A plurality of UWB anchors are configured in UWB device B 1, correspondingly, the index of the response time slot allocated to UWB device B1 in the UWB start frame can be one or more, with the quantity related to the number of UWB anchors participating in the ranging interaction.

In some embodiments, the indices of each response time slot extracted by UWB device B1 point to one of the plurality of response time slots configured for UWB devices B1 and B2 by UWB device A. To reduce the possibility of overlap between adjacent response time slots caused by different synchronized clock systems, the period of each response time slot set by UWB device A may include some redundancy. Among them, the starting time of each response time slot is determined based on the timestamp of the sent/received UWB start frame, a preset delay, and the period of each response time slot. The period of each response time slot may be carried by the ranging start frame. Alternatively, the period of each response time slot is prestored in all UWB devices, so it does not need to be configured in a separate ranging interaction process. In conjunction with the above embodiments, UWB device A informs UWB devices B1 and B2 of the transmitting timestamp of the UWB start frame and the preset delay set for the first response time slot based on that transmitting timestamp. Thus, both UWB devices B1 and B2 may calculate the starting time of the first response time slot. Among them, UWB device B1 uses the response time slot indices corresponding to its own device parsed from the ranging start frame, along with the aforementioned time information, to calculate the starting time of each response time slot for the UWB anchors in UWB device B1 to perform S22.

It should be noted that the method described above for including the starting time of the first response time slot in the ranging start frame is merely an example; the ranging start frame may also include information about the starting time of the first response time slot at a specified moment. This would not be elaborated further.

At S22, UWB device B1 transmits a response frame in the corresponding response time slot based on the index of the at least one response time slot. The response frame may contain device information of UWB device B1 and other information required for measurement, such as the time synchronization sequence. In some embodiments, the response frame may also include the transmitting timestamp of the response frame, etc., to reduce the error between the starting time of the response time slot and the actual sending time.

Since UWB device A has allocated response time slots to UWB devices B1 and B2 in sequence, UWB devices B1 and B2 may assign their respective UWB anchors to transmit each response frame in order.

At S12, after UWB device A receives a plurality of response frames from a plurality of sessions of UWB devices B1 and B2 within the sequential response time slots, it sends one or more ranging end frames to the plurality of second devices. The ranging end frame may be a single UWB signal frame or a plurality of UWB signal frames. This ranging end frame is exemplified by the Final frame shown in FIG. 1a, to inform UWB devices B1 and B2 that the ranging for this round has ended. The ranging end frame may also carry data related to the measurements of this round. For example, it may include measurement values such as the transmission and reception timestamps of all UWB signal frames recorded by the UWB devices participating in this round of ranging across different sessions, and/or measurement values such as distance/angle, etc.

For instance, UWB device A uses the Final data frame structure to share the recorded measurement values with the peer devices participating in this round of ranging across different sessions, namely UWB devices B1 and B2.

Additionally, UWB devices A, B1, and B2 utilize ranging end frames such as MRM, RRRM, and CRUM to share their respective recorded measurement values. The sharing method may be similar to the efficient transmission of response time slots configured for different sessions in the embodiments of the present disclosure, or independent data transmission may be conducted between the two UWB devices involved in the ranging interaction.

Thus, either UWB device A or UWB devices B1 and B2 may perform measurement calculations, that is, performed S3 (not illustrated).

At S3, measurement calculations are performed using the transmission start frame and the transmission and reception timestamps of each response frame.

In the ranging interaction process of the aforementioned embodiments, UWB device A records a first transmission timestamp of the sent UWB start frame and a second reception timestamp of each response frame received . Each of UWB devices B1 and B2 records the first reception timestamp of the locally received UWB start frame and the second transmission timestamp of the locally sent response frame. By reporting the above timestamps in the UWB start frame, response frame, or ranging end frame to the participating UWB devices, distance/angle and other measurement calculations can be performed using measurement algorithms. The ranging algorithms include, but are not limited to, SS_TWR (Single-sided Two-way Ranging) or eSS_TWR (Enhanced Single-sided Two-way Ranging), etc. The angle measurement algorithms include, but are not limited to, AOA (Angle-of-Arrival), etc.

The embodiments of the present disclosure also take into account situations such as different start and end times of different sessions, or varying effective durations of each session, which may lead to coexistence or non-coexistence of a plurality of sessions, potentially causing dynamic updates during the ranging interaction process. To this end, during a plurality of rounds of ranging interactions, the number of response time slots configured in the UWB start frames of different rounds is adjusted according to the updated sessions.

For example, in conjunction with the timing block shown in FIG. 4a, UWB device A establishes session Session_1 with UWB device B1. By establishing session Session_1, UWB device A configures four response time slots during the ranging interaction for the four UWB anchors in UWB device B1. During the ranging round Round_11 in the ranging block Block_1, UWB device A sends the UWB start frame P_start_1 to UWB device B1 and subsequently receives the response frames P_response_11, P_response_12, P_response_13, and P_response_14 from the four UWB anchors in UWB device B1 in the following four response time slots. Then, UWB device A transmits the ranging end frame P_final_1, completing one round of ranging interaction. In FIG. 4a, the time periods of ranging rounds Round_12 to Round_1n are mainly provided to indicate that the ranging block Block_1 contains a plurality of ranging rounds, and the time periods of ranging rounds Round_12 to Round_1n have similar meanings to the aforementioned ranging round Round_11, which would not be elaborated on here.

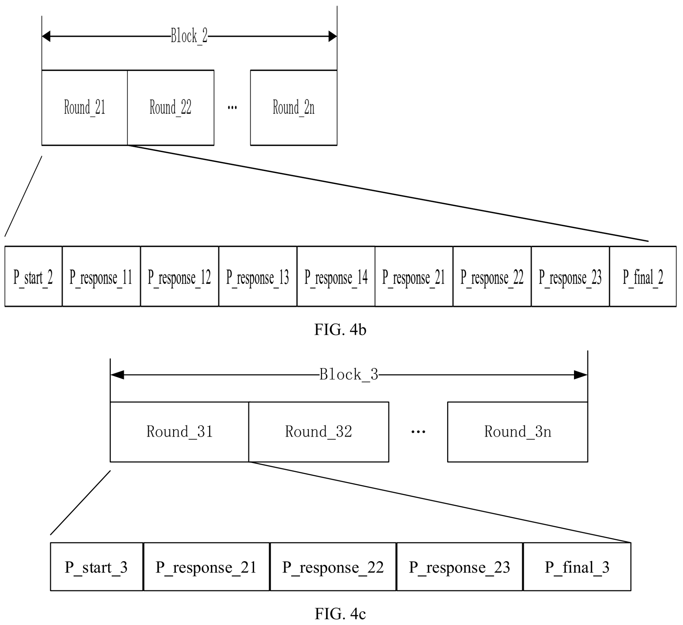

In relation to the aforementioned rounds of ranging interaction, without a necessary execution order, as shown in FIG. 4b, UWB device A also establishes session Session_2 with UWB device B2. By establishing session Session_2, UWB device A determines that it needs to perform ranging interactions with three UWB anchors in UWB device B2. During the ranging round Round_21 in the ranging block Block_2, UWB device A sends the UWB start frame P_start_2 to UWB devices B1 and B2 in the transmission time slot slot_0, and subsequently receives the response frames (P_response_11, P_response_12, P_response_13, P_response_14; P_response_21, P_response_22, P_response_23) from the four UWB anchors in UWB device B1 and the three UWB anchors in UWB device B2 in the following seven response time slots (Slot_1, ..., Slot_7). Then, UWB device A sends the ranging end frame P_final_2 in the transmission time slot Slot_8, completing another round of ranging interaction. In FIG. 4b, the time periods of ranging rounds Round_22 to Round_2n are mainly provided to indicate that the ranging block Block_2 contains a plurality of ranging rounds, and the time periods of ranging rounds Round_22 to Round_2n have similar meanings to the aforementioned ranging round Round_21, which would not be elaborated on here.

FIG. 4c shows the failure of Session_1, where UWB device A no longer interacts with UWB device B1 for ranging. During the ranging block Block_3 in the ranging round Round_31 period, UWB device A sends the UWB start frame P_start_3 to UWB device B2, and subsequently receives the response frames P_response_21, P_response_22, and P_response_23 from three UWB anchors in UWB device B2 in the following three response time slots; then, UWB device A sends the ranging end frame P_final_3, completing a round of ranging interaction. In FIG. 4c, the ranging rounds Round_32 period to Round_3n period are mainly provided to indicate that the ranging block Block_3 contains a plurality of ranging rounds, and the periods of ranging rounds Round_32 to Round_3n have similar meanings to the aforementioned ranging round Round_31 period, which would not be elaborated on here.

It could be seen that in the process of dynamically maintaining sessions during each round of ranging interaction, the duration of each ranging round does not necessarily have to be equal.

The plurality of session ranging interaction methods provided in the embodiments of the present disclosure may be flexibly configured with other ranging interaction methods. In some embodiments, various ranging modes may be compatible, such as Hopping mode (also known as jump mode) and No Hopping mode (also known as non-jump mode). For example, UWB device A maintains three sessions Session_1, Session_2, and Session_3 with UWB devices B1, B2, and B3, respectively. Among them, UWB device A and UWB device B1 use No Hopping mode, and UWB device A uses Hopping mode with UWB devices B2 and B3. Thus, UWB device A interacts for ranging with UWB device B1 fixed in the first ranging round of each ranging block, and in the remaining a plurality of ranging rounds of each ranging block, UWB device A interacts for ranging with UWB devices B2 and B3 using the ranging interaction methods provided in the embodiments of the present disclosure.

In some embodiments, based on the ranging roles of UWB devices in a plurality of sessions, such as Initiator, Responder, or Controller, Controlee, etc., independent ranging interactions and/or the efficient ranging methods provided in the embodiments of the present disclosure are adopted. For instance, in the configuration of sessions Session_1 and Session_2, UWB device A is the Initiator role, while UWB devices B1 and B2 are both Responder roles; in the configuration of session Session_3, UWB device B3 is the Initiator role, and UWB device A is the Responder role. In this way, UWB device A interacts for ranging with UWB devices B1 and B2 using the methods of the embodiments of the present disclosure, and UWB device A interacts for ranging separately with UWB device B3.

The UWB devices mentioned in any of the above embodiments may include at least one UWB anchor. Each UWB anchor may include UWB transceiver circuit, signal processing circuit, and controller, etc. The controller is coupled to the signal processing circuit and the UWB transceiver circuit, coordinating the execution of the aforementioned operations S11~S12, S3; or S21~S22, S3, to interact with other UWB devices for ranging and measurement calculations.

Under the control of the controller, the UWB transceiver circuit in a single UWB anchor sends UWB signals and/or receives UWB signals to achieve wireless transmission of each UWB signal.

Examples of signal processing circuit include digital dedicated circuits or programmable logic circuits, etc. A signal processing circuit in a single UWB anchor performs signal analysis on the digital sequences received and digitized by a respective UWB transceiver circuit and report the analysis results. Signal analysis includes, but is not limited to, signal detection, statistics, classification, etc., using signal spectrum, power spectrum, phase, and other means. Signal analysis also includes, but is not limited to, a series of signal processing performed on the digital sequences for purposes such as calibration, detecting the radio environment, measurement strategies, and reporting measurement data, such as FFT (Fast Fourier Transform) and signal quality calculations.

The signal processing circuit adjusts the transmission/reception parameters of the UWB transceiver circuits based on the analysis results. For example, the signal processing circuit detects available UWB channels and stores the response frame and the start time of the designated response time slot in a register. When the timing reaches the start time of the designated response time slot, it controls the UWB transceiver circuits to send the response frames.

The controller may be configured as a single UWB anchor to load the initial data required for the operation of the signal processing circuit and UWB transceiver circuit into various registers to initiate the operation of the signal processing circuit and UWB transceiver circuit. The controller may also be configured in the UWB device and connected to a plurality of UWB anchors for data/instruction interaction between each UWB anchor and the upper-layer applications. For example, the controller sends data/instructions provided by other wireless modules in the UWB devices (such as the BLE (Bluetooth Low Energy) module) to the UWB anchors to trigger the operation of the signal processing circuit and UWB transceiver circuit within the UWB anchors. The sent data may include any of the following: various parameters that need to be configured for performing UWB ranging interactions, and various instructions sent for controlling UWB ranging interactions. The various parameters include, for example, those required for UWB ranging interactions: session, start time, device information, ranging block index, ranging round index, etc. The instructions include, for example: instructions for various security authentications conducted for this data transmission, and instructions indicating the UWB device to initiate the execution of UWB ranging interactions.

The UWB device involved in the embodiments of the present disclosure includes radio devices, such as UWB chips. The radio devices may achieve functions such as target detection and/or communication by sending and receiving radio signals, providing target detection information and/or communication information to the electronic devices where the UWB devices are located, thereby assisting or even controlling the operation of the electronic devices.

When the aforementioned electronic devices are applied to tag positioning, gate control, vehicle and key interaction, etc., the UWB devices may provide technical support for various application scenarios such as seamless passage, vehicle rental, and positioning for each system.

The technical features of the above-described embodiments may be combined in any way. To keep the description concise, not all possible combinations of the various technical features in the above embodiments are described; however, as long as these combinations of technical features do not contradict each other, they should be considered within the scope of this specification.

Note that the above is only a preferred embodiment and the technical principles applied in the disclosure. Those skilled in the art would understand that the disclosure is not limited to the specific embodiments here, and various obvious modifications, adjustments, and alternatives may be made without departing from the scope of the disclosure. Therefore, although the disclosure has been described in detail through the above embodiments, it is not limited to these embodiments alone. Without departing from the concept of the disclosure, it may also include more other equivalent embodiments, and the scope of the disclosure is determined by the scope of the appended claims.

## Claims

1. An Ultra-Wide Band (UWB) communication method for a first device, the method comprising:
sending a ranging start frame to a plurality of second devices;
receiving response frames from the plurality of second devices in a plurality of response time slots,;
sending a ranging end frame to the plurality of second devices;
wherein the first device maintains at least two sessions with different second devices concurrently, ,.

2. The UWB communication method according to claim 1, further comprising:
measuring calculationsrespectively, by using transmission and reception timestamps of the ranging start frame and each of the response frames.

3. The UWB communication method according to claim 1 or 2, wherein the ranging end frame includesmeasurement values configured based on each session.

4. The UWB communication method according to any one of claims 1 to 3, wherein the first device sends UWB signal frames to the plurality of second devices in a same transmission slot, wherein the UWB signal frames include the ranging start frame, and/or the UWB end frame.

5. The UWB communication method according to any one of claims 1 to 4, wherein at least one of the plurality of second devices includes a plurality of UWB anchors participating in ranging interactions, and the plurality of response time slots include a respective response time slot for sending a response frame for each of the UWB anchors.

6. The UWB communication method according to claim 5, wherein consecutive response time slots among the plurality of response time slots are used to send response frames for the plurality of UWB anchors.

7. The UWB communication method according to any one of claims 1 to 6, wherein the ranging start frame includes measurement parameters configured based on each session.

8. The UWB communication method according to any one of claims 1 to 7, wherein data carried by the UWB signal frames exchanged between the first device and each of the plurality of second devices is obtained from information security processing configured based on each session

9. TheUWB communication method according to any one of claims 1 to 8, wherein the data carried by the UWB signal frames that the first device interacts with each of the plurality of second devices includes data shared among different sessions.

10. The UWB communication method according to any one of claims 1 to 9, wherein during a multi-round ranging interaction, the number of response time slots for a plurality of rounds is adjusted according to an updated session.

11. An Ultra-Wide Band (UWB) communication method for a second device, the method comprising: ;
extracting an index of at least one response time slot corresponding to the second device from the ranging start frame;
transmitting a response frame in the corresponding response time slot based on the index of the at least one response time slot; and
receiving a ranging end frame;
wherein the ranging start frameincludes measurement parameters configured based on at least two sessions, and the index of the at least one response time slot is configured in the measurement parameters to support a ranging response executed in one of the at least two sessions.

12. The UWB communication method according to claim 11, wherein the second device includes a plurality of UWB anchors participating a ranging interaction, and the index of the plurality of response time slots indicates a respective response time slot for each UWB anchor to send a response frame.

13. The UWB communication method according to claim 11 or 12, further comprising: performing measuring calculations using transmission and reception timestamps of the ranging start frame and each of the response frames.

14. A UWB communication system, comprising: a first device and a plurality of second devices; wherein the first device establishes at least two sessions with different second devices; the first device performs each operation provided in any of claims 1 to 10 to interact with each of the plurality of second devices for ranging.

15. A UWB device, comprising:
a UWB transceiver circuit;
a signal processing circuit; and
a controller;
wherein the controller is coupled to the signal processing circuit and the UWB transceiver circuit, and coordinates the signal processing circuit and the UWB transceiver circuit to execute any of the UWB communication methods as described in claims 1 to 10, or to execute any of the UWB communication methods as described in claims 11 to 13.
